# FASCICULE DE BREVET EUROPEEN

(11) **EP 2 796 390 B1**
(45) Date de publication et mention de la délivrance du brevet: **11.07.2018**
(21) Numéro de dépôt: 13305555.8
(22) Date de dépôt: 26.04.2013
(51) Int. Cl.: B65G 1/04, B65G 1/133

(54) **SYSTÈME DE TRANSPORT ET DE STOCKAGE AUTOMATIQUE DE PRODUITS POUR LA PRÉPARATION DE LEURS COMMANDES ET PROCÉDÉ DE CONTRÔLE DUDIT SYSTÈME**
AUTOMATISCHES TRANSPORT- UND LAGERSYSTEM FÜR PRODUKTE ZUR VORBEREITUNG IHRER BESTELLUNGEN UND KONTROLLVERFAHREN DIESES SYSTEMS
SYSTEM FOR AUTOMATIC TRANSPORT AND STORAGE OF PRODUCTS FOR PREPARING ORDERS AND METHOD FOR CONTROLLING SAID SYSTEM

(43) Date de publication de la demande: 29.10.2014
(73) Titulaire: Cobel S.A. (Société Anonyme), 1260 Luxembourg (LU); Metalprogetti S.p.a., 06128 Perugia (IT)
(72) Inventeur: Santicchi, Eléna, 06128 Perugia (IT); Launay, Patrick, 67118 Geispolsheim (FR)
(74) Mandataire: Nuss, Laurent

(56) Documents cités:
- EP-A1- 0 383 257
- EP-A1- 1 495 995
- DE-A1-102006 025 876
- DE-U1- 29 823 766
- FR-A1- 2 306 021
- GB-A- 1 531 028
- JP-A- 60 262 702
- US-A1- 2003 156 427

## Description

La présente invention concerne le domaine de la distribution de produits, plus particulièrement de la grande distribution de produits, notamment de produits alimentaires, et a pour objet un système de transport et de stockage automatique desdits produits pour la préparation de leurs commandes. Elle a également pour objet un procédé de contrôle dudit système.

Depuis quelques années de nombreuses grandes surfaces, par exemple dans le domaine de l'alimentaire, ont mis au point et installées des nouveaux commerces communément connus sous le nom de « drive ». Ces commerces sont basés sur un concept de vente en ligne permettant au client de faire sa commande à distance, notamment sur un site internet, et de venir ensuite retirer ses produits sur place.

Le retrait des colis est généralement effectué sur un site mitoyen de la grande surface classique ou sur un site isolé dans un entrepôt indépendant.

De tels « drive » connaissent actuellement un fort développement et une grande expansion du fait notamment d'une demande toujours plus importante de la part des consommateurs qui veulent libérer des plages de temps pour faire d'autres achats ou d'autres activités et du faible coût de l'installation d'un « drive » par rapport à celui d'une grande surface classique.

Le « drive », qui ne comporte pas de surface de vente sur place à l'instar de la grande surface classique, comprend essentiellement un entrepôt fermé et sécurisé comprenant une unité de stockage et de préparation dans laquelle sont préparées manuellement les commandes qui sont mises dans des réceptacles tels que des sacs ou des bacs stockés temporairement dans une unité de stockage et de distribution dans l'attente de leur retrait par un client identifié et autorisé.

L'unité de stockage et de préparation a donc essentiellement pour but de former une zone de stockage de produits à proximité des préparateurs de commande leur évitant de longs trajets contraignants jusqu'au centre de stockage principal retardant d'autant les temps de préparation des commandes.

Parmi les unités de stockage et de préparation actuels certaines comprennent des rayonnages pour stocker les produits soit directement sur des étagères, soit dans des porte-charges du type bacs ou palettes posés sur les étagères ou à même le sol.

Toutefois, ces unités de stockage, malgré leur proximité, sont contraignantes pour les opérateurs qui doivent se rendre en différents points de la zone de stockage pour trouver chaque produit stocké devant composer la commande du client à préparer.

D'autre part, les opérateurs qui interviennent durant les opérations de chargement ou de déchargement interfèrent régulièrement entre eux ce qui génèrent des gênes préjudiciables à une bonne coordination et réduit d'autant la fluidité et la rapidité des opérations.

En outre, ces unités de stockage et de préparation ne permettent pas de stocker un grand nombre de produits et nécessitent de ce fait des arrêts fréquents pour recharger le transporteur en produits, ce qui retarde d'autant la préparation des commandes et pose de sérieux problèmes aux heures d'affluence.

Par ailleurs, le stockage des produits dans les rayonnages, qui est accessible librement par tout opérateur ou toute personne présente sur le site, n'est pas sécurisé et il est constaté régulièrement de nombreux vols de produits. D'autre part, les opérations d'approvisionnement des rayonnages se font à des hauteur différentes qui obligent les opérateurs à se courber pour les rayonnages inférieurs occasionnant de nombreuses blessures, notamment articulaires, plus particulièrement au niveau du dos et à utiliser des appareils du type échelle ou escabeau pour atteindre les rayonnages les plus élevés et qui entraînent parfois des chutes ou des mouvements non sécurisés et génèrent des pertes de temps pour y accéder notamment en cas de commandes importantes à honorer.

Le document FR 2 306 021 a pour objet un dispositif distributeur comportant une enceinte renfermant un module comportant au moins un transporteur sans fin constitué par deux courroies ou chaînes horizontales superposées auxquelles des cases sont fixées. Chaque transporteur de forme allongée s'étend dans l'enceinte qui présente deux faces latérales et deux faces d'extrémité, dont l'une des faces latérales est accessible au public et comporte une porte permettant l'accès à une case et l'autre face latérale est inaccessible au public et peut comporter une porte pour le remplissage de la case.

Toutefois, le dispositif divulgué par le document FR 2 306 021, dont la ou les portes d'accès sont disposées chacune sur l'une des faces latérales de l'enceinte, ne permet pas de réaliser de façon optimum et en continu des opérations de chargement ou de déchargement.

La présente invention a pour but de pallier à au moins un de ces inconvénients.

A cet effet, la présente invention a pour objet un système de transport et de stockage automatique de produits pour la préparation de leurs commandes, ledit système comprenant une station de stockage desdits produits comprenant des porte-charges individuels aptes à être approvisionnés en produits stockés dans ces derniers dans l'attente de leur prélèvement pour réaliser ladite préparation, et se caractérisant en ce que la station de stockage comprend en outre :
- une enceinte renfermant une pluralité de modules de transport et de stockage comprenant chacun au moins deux convoyeurs indépendants capables de transporter automatiquement, indépendamment l'un de l'autre, lesdits portes-charges, lesdits convoyeurs, qui forment chacun un circuit de transport et de stockage en boucle fermée s'étendant dans un plan horizontal ou sensiblement horizontal, étant superposés l'un au-dessus de l'autre,
- une pluralité d'ouvertures d'accès pratiquées dans ladite enceinte permettant à un opérateur d'accéder, depuis l'extérieur de l'enceinte, aux porte-charges pour réaliser leur approvisionnement en produits et/ou le prélèvement des produits stockés dans ces derniers,
- une pluralité de portes et/ou une pluralité de fenêtres permettant d'assurer la fermeture de chaque ouverture d'accès, chaque porte ou fenêtre définissant un poste d'approvisionnement et/ou de prélèvement,
- des moyens de contrôle et de gestion prévus essentiellement pour commander et contrôler chaque module et, le cas échéant, l'ouverture ou la fermeture automatique de chaque porte,
et en ce que :
- les modules s'étendent dans l'enceinte parallèlement ou sensiblement parallèlement les uns à côtés des autres,
- chaque module est allongé ou rectiligne en s'étendant entre deux extrémités opposées, dont l'une des extrémités est formée par l'un desdits postes prévu pour assurer essentiellement l'approvisionnement en produits des porte-charge, le cas échéant le prélèvement des produits de ces derniers, et l'autre extrémité est formée par l'autre ou l'un des autres postes prévu pour assurer essentiellement le prélèvement des produits stockés des porte-charges, le cas échéant l'approvisionnement en produits de ces derniers.

Ainsi, un tel système de transport et de stockage automatique de produits pour la préparation de commandes de produits destinés à être stockées, en aval dudit système, dans l'attente de leur distribution, permet notamment d'automatiser les opérations de stockage des produits de sorte à éviter aux opérateurs des déplacements jusqu'aux différents emplacements de stockage des produits pour leur stockage ou leur prélèvement. Un tel système permet un fonctionnement en continu évitant toute interférence ou contrariété entre les opérations de chargement ou d'approvisionnement et les opérations de déchargement ou de prélèvement, c'est-à-dire permettant de réaliser de façon simultanée une opération de chargement par un opérateur et une opération de déchargement par un autre opérateur sans arrêter le système. Un tel système permet également d'augmenter notablement la capacité de stockage par rapport aux systèmes actuels et ce dans un encombrement réduit.

La présente invention a également pour objet un procédé de contrôle du système tel que défini selon la présente invention, dont chaque convoyeur de chaque module est prévu pour stocker les mêmes produits que le ou les autres convoyeurs de sorte à former, dans chaque module , un ou plusieurs convoyeurs relais capables de prendre le relais du ou des autres convoyeurs, ledit procédé se caractérisant en ce qu'il consiste à réaliser les étapes suivantes, selon qu'il contrôle le prélèvement des produits ou leur approvisionnement :
pour le contrôle du prélèvement du produit commandé au ou à l'un des postes de prélèvement de l'un des modules :
- une étape de validation du prélèvement du produit,
- puis une étape de commande de l'un des convoyeurs pour amener le produit jusqu'au poste d'approvisionnement et/ou de prélèvement concerné, ou, lorsque l'un au moins des convoyeurs stockant ledit produit est engagé dans une étape d'approvisionnement ou d'interruption, par exemple une étape de maintenance, à réaliser une étape de commande du ou de l'un des autres convoyeurs relais du module ou du même module, qui n'est pas engagé dans ladite étape d'approvisionnement ou d'interruption, pour amener le produit stocké jusqu'audit poste concerné,
   - pour le contrôle de l'approvisionnement en produit au ou à l'un des postes d'approvisionnement et/ou de prélèvement de l'un des modules :
      - une étape de validation de l'approvisionnement en produit,
      - une étape de commande de l'un des convoyeurs pour amener un porte-charge à approvisionner en produit jusqu'au poste d'approvisionnement concerné ou, lorsque l'un au moins des convoyeurs comportant un porte-charge vide ou partiellement vide destiné à recevoir le produit à approvisionner est engagé dans une étape de prélèvement ou d'interruption, par exemple de maintenance, à réaliser une étape de commande du ou de l'un des autres convoyeurs relais qui n'est pas engagé dans ladite étape de prélèvement ou d'interruption, pour amener ledit porte-charge vide ou partiellement vide jusqu'audit poste concerné.

L'invention sera mieux comprise, grâce à la description ci-après, qui se rapporte à un mode de réalisation préféré, donné à titre d'exemple non limitatif, et expliqué avec référence aux dessins schématiques annexés, dans lesquels :
- la figure la montre une vue en perspective d'un système selon la présente invention dans un mode de réalisation préférentiel comprenant deux côtés opposés de chargement et/ou de déchargement et une pluralité de modules disposés longitudinalement côte à côte,
- la figure 1b montre une vue en perspective partielle de l'un des deux côtés opposés du système représenté sur la figure 1 servant principalement à l'approvisionnement des produits dans les convoyeurs de stockage,

- la figure 1c montre une vue en perspective partielle de l'autre côté du système représenté sur la figure 1 servant principalement au prélèvement des produits dans les convoyeurs de stockage,
- la figure 2 montre une vue en perspective de l'extrémité de déchargement ou prélèvement de l'un des modules du système représenté sur la figure 1,
- la figure 3a montre une vue en perspective d'un convoyeur, du module représenté sur la figure 1, dans un mode de réalisation préférentiel comprenant deux lignes superposées faisant apparaître les roulements de l'élément d'entraînement et de transport correspondant,
- la figure 3b montre une vue de détail d'une section de la ligne supérieure du convoyeur représenté sur la figure 3a,
- la figure 4a montre une vue schématique en perspective de trois quart de la face arrière de l'un des porte-charges comprenant plusieurs étages de stockage et étant fixé ou accroché en quatre points, directement ou indirectement, sur les deux lignes du convoyeur représenté sur la figure 3a,
- la figure 4b montre une vue schématique en perspective de trois quart de la face avant du porte-charge représenté sur la figure 4a,
- la figure 5 montre un porte-charge du type bac ou panier ajouré et le mécanisme de support et de guidage du dispositif extracteur associé audit porte-charge, à l'état déployé dudit mécanisme en vue de réaliser l'extraction du porte-charge,
- la figure 6 montre le porte-charge et le mécanisme représentés sur la figure 6, à l'état replié de ce dernier,
- la figure 6a montre une vue en perspective du mécanisme de support et de guidage de chaque porte-charge et des pièces de liaison permettant de fixer indirectement par leur intermédiaire le porte-charge sur l'élément d'entraînement et de transport correspondant,
- la figure 6b montre une vue en détail au niveau de la fixation de l'une des deux pattes de fixation supérieures,
- la figure 6c montre une vue en détail au niveau de la fixation de l'une des deux pattes de fixation inférieures,
- la figure 7 montre une vue de profil d'un porte-charge associé à un dispositif extracteur monté dans un convoyeur, en phase de déploiement du mécanisme de support et de guidage en vue de réaliser l'extraction du porte-charge,
- la figure 8 montre une vue de face détaillée d'une porte d'accès d'un poste d'approvisionnement et/ou de prélèvement d'un module du système selon la présente invention comprenant trois convoyeurs superposés et des dispositifs extracteurs associés aux porte-charges des deux convoyeurs inférieurs, dans un mode de réalisation préférentiel de la porte.

Les figures montrent au moins un système de transport et de stockage automatique de produits, selon la présente invention, pour la préparation des commandes desdits produits effectuée à distance par des clients, par exemple via un site internet, ledit système comprenant une station de stockage 1 des produits comprenant des porte-charges 3 individuels aptes à être approvisionnés en produits stockés dans ces derniers dans l'attente de leur prélèvement pour réaliser ladite préparation.

Conformément à la présente invention, la station de stockage 1 comprend en outre:
- une enceinte 9 renfermant une pluralité de modules 4 de transport et de stockage comprenant chacun au moins deux convoyeurs indépendants 2 capables de transporter automatiquement, indépendamment l'un de l'autre, lesdits portes-charges, c'est-à-dire que l'un des convoyeurs 2 peut fonctionner lorsque l'autre est à l'arrêt et réciproquement, lesdits convoyeurs, qui forment chacun un circuit de transport et de stockage en boucle fermée s'étendant dans un plan horizontal ou sensiblement horizontal, étant superposés l'un au-dessus de l'autre
- une pluralité d'ouvertures d'accès pratiquées dans ladite enceinte permettant à un opérateur d'accéder, depuis l'extérieur de l'enceinte 9, aux porte-charges 3 pour réaliser leur approvisionnement en produits et/ou le prélèvement des produits stockés dans ces derniers,
- une pluralité de portes 9a et/ou une pluralité de fenêtres permettant d'assurer la fermeture de la ou de chaque ouverture d'accès, chaque porte 9a ou fenêtre définissant un poste de d'approvisionnement et/ou de prélèvement 5 ou 6,
- des moyens de contrôle et de gestion prévus essentiellement pour commander et contrôler chaque module 4 et, le cas échéant, l'ouverture ou la fermeture automatique de chaque porte.

Plus particulièrement, les moyens de contrôle et de gestion de chaque module 4 peuvent être prévus essentiellement pour commander chaque convoyeur 2, c'est-à-dire pour commander leur mouvement et donc le déplacement des porte-charges 3 entraînés ou tractés par les convoyeurs 2 correspondant de sorte à amener chaque porte-charge 3 vide ou partiellement vide et destiné à recevoir le produit à charger jusqu'au ou à l'un des postes d'approvisionnement et/ou de prélèvement 5 ou pour amener un porte-charge 3 contenant un ou plusieurs produits destinés à réaliser la préparation d'une commande jusqu'au ou à l'un des postes d'approvisionnement et/ou de prélèvement 5, 6.

D'autre part, les moyens de contrôle et de gestion peuvent comprendre, de préférence, une unité centrale de contrôle et de gestion, prévue pour commander et contrôler notamment les modules 4, et/ou une pluralité d'unités de contrôle et de gestion permettant de contrôler l'un des modules 4 et pouvant être indépendantes les unes des autres ou le cas échéant reliées à ladite unité centrale.

La présente invention peut prévoir qu'au moins l'un des porte-charges 3 soit monté de façon amovible dans le convoyeur 2 prévu pour déplacer ce dernier.

On comprendra qu'un opérateur peut prélever les produits d'un convoyeur 2 à l'un des postes d'approvisionnement et/ou de prélèvement 5, 6 correspondant, soit en retirant le produit directement du porte-charge 3, soit en enlevant le porte-charge 3 dans le cas où celui-ci est rendu amovible.

On notera également que le fait que le porte-charge 3 soit amovible permet son enlèvement en vue de son nettoyage. A cet effet, la présente invention peut prévoir en outre que le porte-charge soit démontable pour faciliter son nettoyage.

Le système comprend une pluralité de postes d'approvisionnement et/ou de prélèvement 5, 6 et chaque module 4 est allongé ou rectiligne en s'étendant entre deux extrémités opposées, dont l'une des extrémités est formée par l'un des postes 5, 6 qui est prévu pour assurer essentiellement l'approvisionnement en produits des porte-charges 3, le cas échéant le prélèvement des produits de ces derniers, et l'autre extrémité est formée par l'autre poste d'approvisionnement et/ou de prélèvement 5, 6 qui est prévu pour assurer essentiellement le prélèvement des produits stockés dans les porte-charges 3, le cas échéant l'approvisionnement en produits de ces derniers.

Ainsi, dans chaque module 4, chaque poste être avantageusement rendu réversible, par exemple en cas de maintenance de l'un des postes 5 et 6 ou de surcharge de commandes, c'est-à-dire peut assurer, le cas échéant, l'autre fonction d'approvisionnement ou de prélèvement assurée essentiellement par l'autre poste.

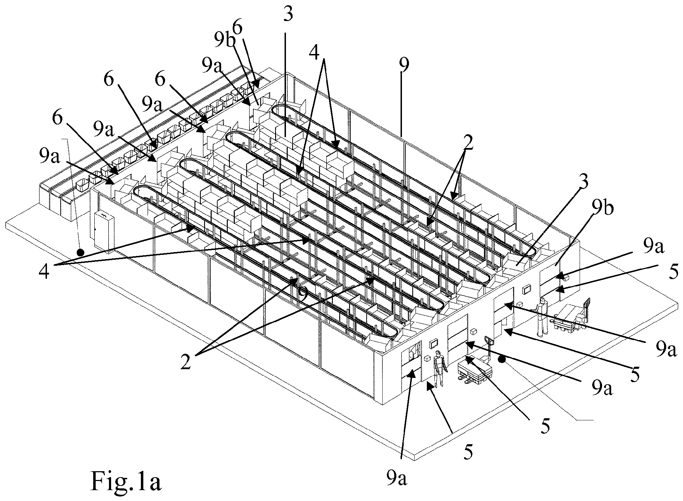

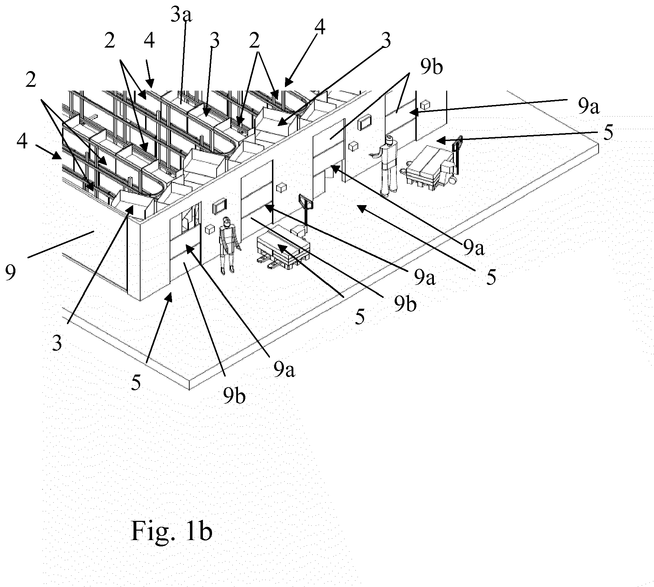

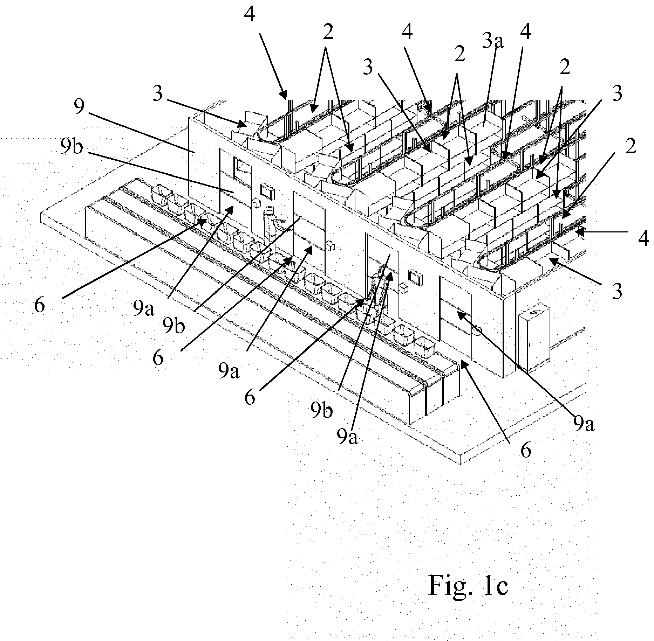

Dans ce mode de réalisation préférentiel, comme on peut le voir sur les figures 1a et 1b, l'enceinte 9 renferme une pluralité de modules 4 s'étendant, dans l'enceinte 9, parallèlement ou sensiblement parallèlement les uns à côtés des autres.

On comprendra que la différence entre une porte et une fenêtre peut résider essentiellement dans le fait que la porte peut permettre une ouverture globale autorisant en outre le passage d'un opérateur pour lui permettre d'entrer dans l'enceinte 9 par exemple pour assurer la maintenance ou la réparation des modules 4.

Chaque porte ou fenêtre d'accès 9a peut comprendre un dormant 9c et peut être fermée, au moins partiellement, par au moins un battant 9b ou autre élément d'un mouvement de pivotement, de glissement ou autre, permettant de fermer partiellement ou totalement la porte ou la fenêtre d'accès 9a dans laquelle il est monté. Dans une forme de réalisation préférentielle, chaque porte ou fenêtre d'accès 9a peut, de préférence, comprendre une pluralité de battants et peut comprendre au moins deux étages comportant chacun au moins un battant 9b, chaque étage de battant(s) 9b étant situé au niveau de l'un des convoyeurs 2 du module 4 correspondant, c'est-à-dire sensiblement à la même hauteur des porte-charges 3 mis en mouvement par le convoyeur 2 correspondant. De préférence, le ou les battants 9b de chaque étage peuvent être adaptés pour être commandés et actionnés automatiquement, au moyen d'un système ferme porte ou fenêtre, ou manuellement en ouverture et/ou en fermeture, indépendamment les uns des autres, par les moyens de contrôle et de gestion et/ou par un moyen de commande propre disposé dans le poste d'approvisionnement et/ou de prélèvement 5, 6 concerné.

Le système ferme porte ou fenêtre peut être un système connu sur le marché actuel des ferme portes ou fenêtres, notamment motorisés, pouvant comprendre un moteur, éventuellement associé à un ressort, et des bras articulés reliés entre le dormant et le battant. Un tel système ferme porte ou fenêtre peut être capable d'actionner, par exemple, l'ouverture du battant à la force du moteur et la fermeture sous l'action combinée du moteur et, le cas échéant, du ressort.

En outre, chaque battant 9b peut être disposé au niveau, c'est-à-dire sensiblement à la même hauteur et en regard, de l'un des convoyeurs 2 du module correspondant (figures 1a, 1b, le et 8).

On comprendra que l'enceinte 9 peut être placée dans un entrepôt, non représenté, de préférence fermé et sécurisé. Un tel entrepôt peut renfermer également une unité de stockage et de distribution, non représentée, située en aval du système selon la présente invention, adaptée pour recevoir les commandes et permettant le stockage temporaire de ces dernières, dans des réceptacles prévus à cet effet, dans l'attente de leur distribution finale aux clients identifiés et autorisés présents sur le site.

En outre, la présente invention peut prévoir que chaque porte 9a ou fenêtre puisse être commandée manuellement et/ou automatiquement en ouverture ou en fermeture par les moyens de contrôle et de gestion, plus particulièrement le cas échéant par l'unité centrale, et/ou par un moyen de commande propre, tel que par exemple un bouton de commande, qui peut être disposé fonctionnellement dans le poste d'approvisionnement ou de prélèvement 5 ou 6, plus particulièrement sur la porte ou fenêtre 9a du poste 5 ou 6 correspondant ou à proximité de cette dernière et de façon accessible pour l'opérateur.

Ainsi, l'accès à chaque convoyeur 2, que ce soit pour réaliser une opération d'approvisionnement ou de prélèvement de produits ou une opération de maintenance, peut être rendu possible uniquement lorsque la porte d'accès 9a concernée est commandée en ouverture, de préférence automatiquement par les moyens de contrôle et de gestion, ce qui garantit un haut niveau de sécurité pour les opérateurs.

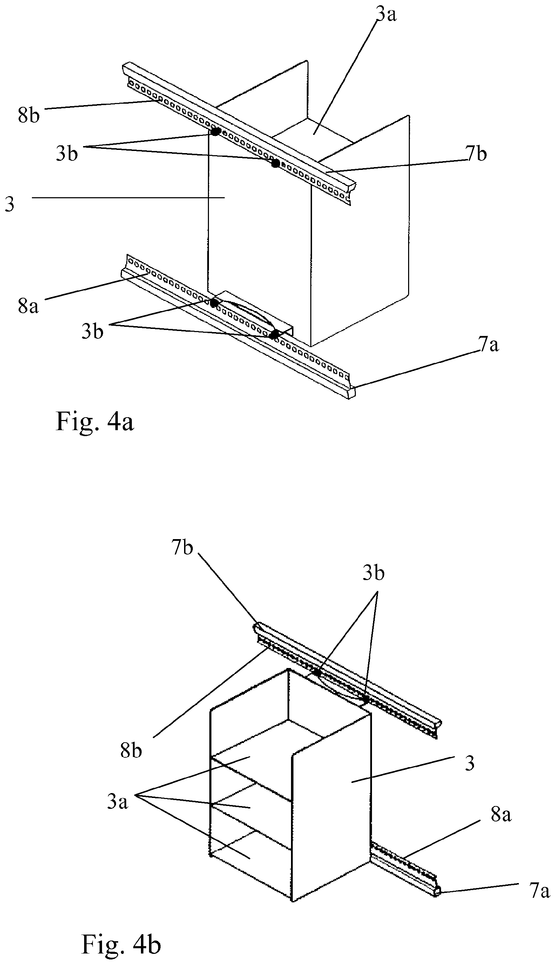

Dans une forme de réalisation préférentielle de chaque convoyeur 2, celui-ci peut comprendre au moins deux lignes, respectivement inférieure 2a et supérieure 2b, de transport en boucle fermée pouvant s'étendre chacune dans un plan horizontal ou sensiblement horizontal. Chaque porte-charge 3 peut être monté directement ou indirectement sur les deux lignes superposées 2a et 2b du convoyeur 2 correspondant en au moins un point de fixation ou d'accrochage, de préférence deux points, sur la ligne supérieure 2b et en au moins un point de fixation ou d'accrochage, de préférence deux points, sur la ligne inférieure 2a (notamment figures 4a, 4b). L'accrochage ou la fixation dans chaque convoyeur 2 de chaque porte-charge 3 en quatre points de fixation ou d'accrochage sur deux lignes de transport 2a et 2b superposées permet un maximum de stabilité, même à vitesse élevée.

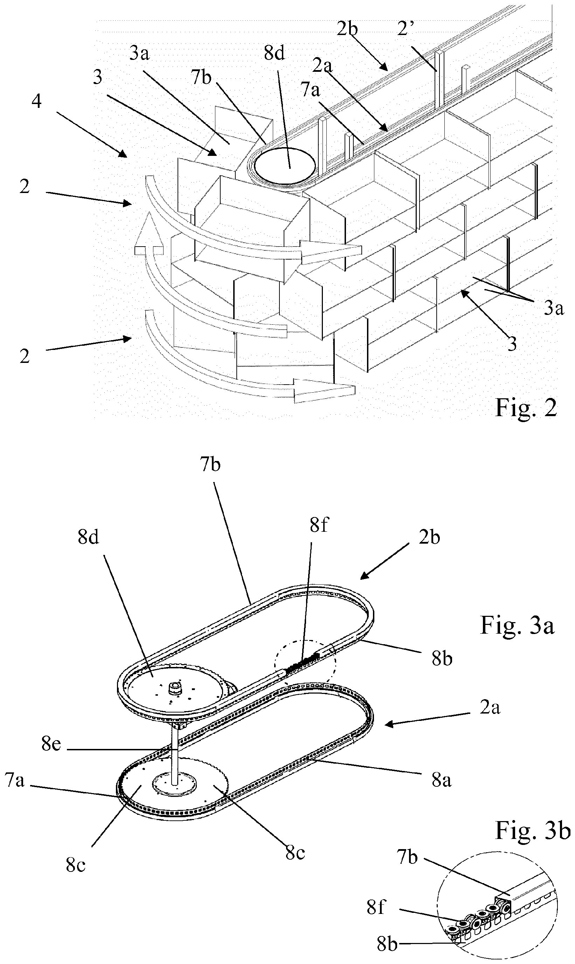

De préférence, chaque ligne 2a ou 2b inférieure ou supérieure peut comprendre un élément d'entraînement et de transport 8a ou 8b continu, tel que par exemple un ruban, une courroie ou une chaîne, des moyens d'entraînement 8c, 8d et 8e et un rail de guidage 7a ou 7b en boucle fermée adapté pour supporter et guider ledit élément d'entraînement et de transport. Chaque élément d'entraînement et de transport 8a ou 8b peut être ainsi apte à circuler le long dudit rail en étant entraîné en déplacement grâce auxdits moyens d'entraînement (figures 2, 3a).

En outre chaque porte-charge 3 du convoyeur 2 correspondant peut être fixé ou accroché, éventuellement de façon amovible, par l'intermédiaire de moyens de liaison 3b, 2c sur l'élément d'entraînement et de transport 8a ou 8b de chaque ligne 2a ou 2b correspondante pour permettre son déplacement le long du rail de guidage 7a ou 7b (figures 4a et 4b).

Plus particulièrement, comme on peut le voir notamment sur la figure 3a et sur la figure 2, les moyens d'entraînement 8c et 8d de chaque convoyeur 2 peuvent consister en deux roues d'entraînement 8c et 8d, d'axes de rotation sensiblement vertical, aptes chacune à entraîner l'un des éléments d'entraînement et de transport 8a ou 8b. En outre, de préférence, les deux roues d'entraînement 8c et 8d de chaque convoyeur 2 peuvent être montées autour d'un axe de rotation 8e commun aux deux roues d'entraînement 8a et 8b et s'étendant sensiblement verticalement.

Bien entendu, une structure porteuse 2' est prévue pour le soutien des éléments porteurs de chaque convoyeur 2 tels que les rails de guidage 7a ou 7b (figures 1a, 1b, 1c, 2, 7).

Chaque élément d'entraînement et de transport 8a ou 8b peut consister de préférence en un ruban ou une courroie flexible et continue, de préférence en acier spécial, monté(e), au moins en partie, par l'intermédiaire d'éléments de roulement ou de glissement 8f, de préférence des roulements 8f tels que, par exemple, des roulements à billes, préférentiellement, des roulement à billes autolubrifiants, dans le rail de guidage 7, ou autres éléments capables de permettre un roulement ou un glissement rapide, silencieux et à frottements réduits, de l'élément d'entraînement et de transport 8a ou 8b (figures 3a et 3b).

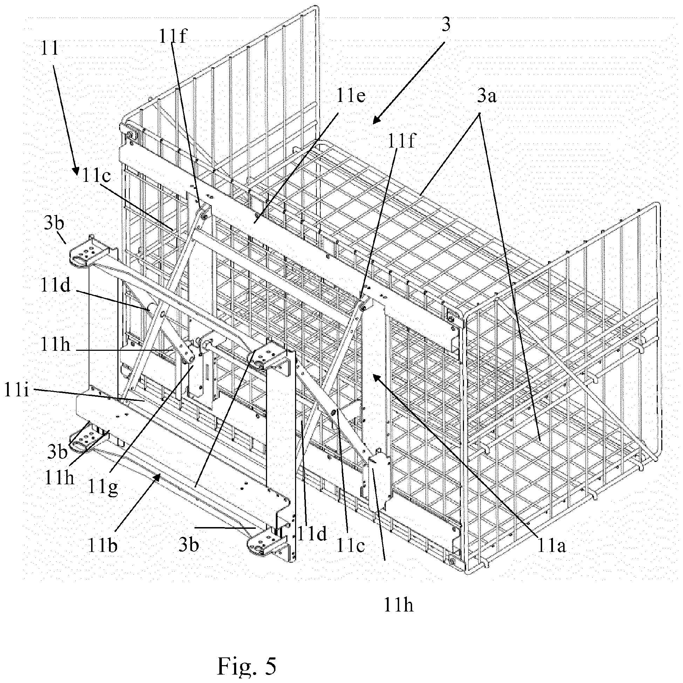

Dans une forme de réalisation préférentielle, chaque porte-charge 3 peut consister en un bac ou un panier, de préférence de forme globalement parallélépipédique rectangle, préférentiellement métallique, plus préférentiellement réalisé à partir d'un un acier électro-galvanisé, ou autre réceptacle analogue, pouvant être ouvert sur au moins l'un de ses côtés de sorte à permettre l'approvisionnement en produit dans le porte-charge 3 ou le prélèvement des produits contenus dans ce dernier (notamment figures 5, 6, 7).

Chaque bac ou panier 3 peut comprendre une série de tablettes 3a horizontales permettant de supporter les produits et pouvant être disposées dans ledit bac ou panier 3 de manière superposée les unes au-dessus des autres (figures 1a, 1b, 1e, 2, 4a, 4b, 5, 6, 7). Chaque tablette 3a peut alors former un étage de stockage dans le bac ou panier 3 accessible par la ou l'une des ouvertures du bac ou panier 3 correspondant. Par ailleurs, de préférence, chaque tablette 3a peut être divisée en une pluralité de secteurs de stockage, de préférence deux, trois ou six secteurs, par exemple matérialisés par des lignes en surépaisseur sur la surface de chaque tablette. De préférence la portée maximum de chaque bac ou panier 3 peut être prévue pour ne pas dépasser environ 50 à 70 kg.

Chaque bac ou panier 3, qui peut comprendre au moins un côté ajouré, peut être plus particulièrement réalisé à partir d'une maille de fil métallique et plus particulièrement une maille de fil d'acier (figures 5, 6, 7). Par exemple, notamment dans la grande distribution de produits alimentaires, chaque bac ou panier 3 peut avoir un volume utilisable, de préférence, d'environ 330 à 350 litres, plus préférentiellement de l'ordre de 400 litres et, le cas échéant, chaque tablette 3a d'un bac ou panier 3 peut présenter, de préférence, une largeur d'environ 950 à 990 mm, préférentiellement de l'ordre de 975 mm, et une profondeur d'environ 530 à 570 mm, préférentiellement 550 mm. Toujours à titre d'exemple, chaque bac ou panier 3 peut présenter, de préférence, une hauteur utilisable de l'ordre 280 à 320 mm, de préférence d'environ 300 mm. Dans d'autres domaines que la grande distribution alimentaire, les dimensions de chaque bac ou panier peuvent être différentes et adaptées aux produits.

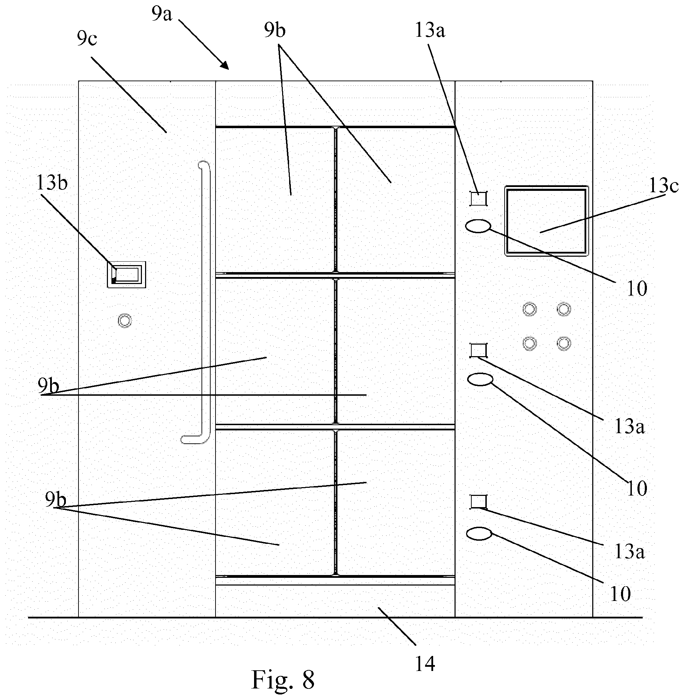

D'autre part, comme on peut le voir plus particulièrement sur la figure 8, la présente invention peut prévoir que au moins l'un des postes d'approvisionnement et/ou de prélèvement 5 ou 6 puisse comprendre des moyens lumineux 10, tels que des diodes électroluminescentes ou émettrice de lumières, abrégées sous le sigle LEDS, indiquant le niveau de l'étage et, le cas échéant le secteur ou le côté du bac ou panier 3 duquel prélever les produits. Il peut être prévu, pour chaque convoyeur 2, au moins une série d'au moins une LED 10, c'est-à-dire une série d'au moins une LED par étage de stockage ou par tablettes dans le panier ou bac 3. Ainsi, chaque série de LEDs 10 à l'état d'émission peut indiquer l'étage de stockage correspondant où se trouve le produit à prélever dans le panier ou bac 3 correspondant et dans le cas où la ou chaque série de LEDs comprend une pluralité de LEDs, par exemple trois LEDs 10, chaque LEDs 10 peut indiquer l'emplacement du produit dans l'étage de stockage du panier ou bac 3, par exemple le côté gauche, le milieu ou le côté droit de l'étage de stockage par rapport à un opérateur faisant face à l'ouverture d'accès dans le bac ou panier 3. Bien entendu d'autres indications ou informations peuvent être prévues selon le nombre de séries de LEDS, la couleur d'émission et leur emplacement (figure 8). De tels moyens lumineux 10 peuvent être fixés sur le dormant 3c de chaque porte ou fenêtre 9a, côté extérieur, c'est-à-dire visible par l'opérateur se trouvant devant cette dernière en vue de réaliser le chargement ou le déchargement.

Dans un mode de réalisation préférentiel, la présente invention peut prévoir que le système puisse comprendre une pluralité de dispositifs extracteurs 11, 12 et que les porte-charges 3 de l'un au moins des convoyeurs 2 du ou d'au moins l'un des modules 4 puissent être rendus extractibles en étant associés chacun à l'un des dispositifs extracteurs (figures 5, 6, 6a, 6b, 6c, 7).

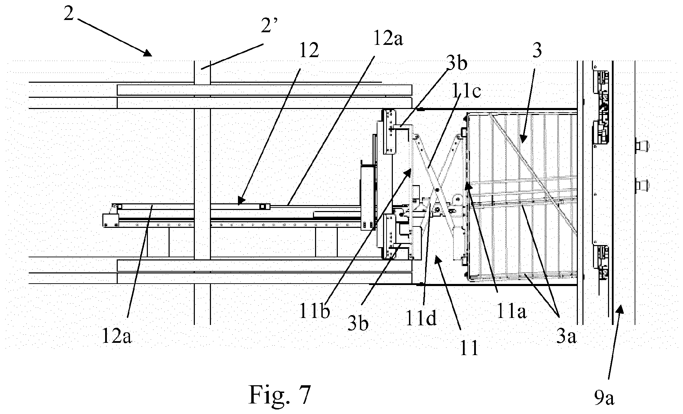

Chaque dispositif extracteur 11, 12 peut être capable de pousser et/ou de tirer le porte-charge 3 associé, de préférence dans une direction sensiblement horizontale et transversale au sens de convoyage, de sorte à pouvoir faire sortir chaque porte-charge 3 extractible de l'enceinte 9 à travers la porte ou fenêtre d'accès 9a du poste d'approvisionnement et/ou de prélèvement 5 ou 6 correspondant où est transporté le porte-charge 3 concerné ou à déplacer chaque porte-charge 3 extractible au niveau de cette dernière, ce en vue de son approvisionnement en ou prélèvement de produits (figure 7).

Ainsi, la sortie ou le déplacement de chaque porte-charge 3 à l'extérieur de l'enceinte 9 ou au niveau de la porte ou fenêtre 9a permet de rapprocher chaque porte-charge 3 extractible concerné de l'opérateur situé à l'extérieur de l'enceinte 9 et de lui faciliter les opérations d'approvisionnement ou de prélèvement des produits, ce tout en diminuant les risques de blessures et notamment des blessures articulaires, plus particulièrement au niveau du dos (figure 7).

Plus particulièrement, la sortie ou l'extraction de chaque porte-charge 3 permet à l'opérateur de se pencher au-dessus, notamment sans se courber ou de façon limitée, du porte-charge 3 sortie ou avancé vers l'opérateur et de mieux voir son contenu, notamment dans le cas où le porte-charge 3 est constituée par une structure ajourée ou maillée ou dont la face supérieure est ouverte ou transparente. A cet effet, la présente invention peut prévoir que seuls le ou les convoyeurs 2 inférieurs, c'est-à-dire le ou les convoyeurs 2 dont les porte-charges 3 sont situés à une hauteur inférieure à la hauteur d'un homme de hauteur normale ou moyenne, soient équipés de porte-charges 3 extractibles. Dans un mode de réalisation où au moins l'un des modules comprend, par exemple, deux ou trois niveaux ou étages de convoyage, c'est-à-dire deux ou trois convoyeurs 2 superposés, il peut être prévu que seul le niveau, c'est-à-dire l'étage, inférieur ou les deux niveaux inférieurs comprennent des portes-charges 3 extractibles, le deuxième ou le troisième niveau pouvant alors être prévu pour que les porte-charges 3 ne soit pas extractibles et contiennent uniquement des produits encombrants et légers ou autres produits facilement accessibles et saisissables en hauteur par l'opérateur.

De préférence, chaque porte-charge extractible 3 peut être commandé en déplacement par les moyens de gestion et de contrôle ou directement par l'opérateur au moyen d'une unité de commande située au niveau de la porte ou fenêtre 9a du poste d'approvisionnement ou de prélèvement concerné 5 ou 6. D'autre part, chaque porte-charge 3 extractible peut être prévu pour être asservi à l'ouverture et/ou à la fermeture de la porte ou fenêtre 9a concernée et être alors déplacé soit, dès l'ouverture de la porte ou fenêtre 9a correspondante, au niveau ou au-delà de cette dernière à l'extérieur de l'enceinte 9, soit, dès la fermeture de la porte ou fenêtre 9a, vers le convoyeur 2 concerné.

Si on se réfère plus particulièrement à la figure 7, on peut voir que, dans un mode de réalisation préférentiel de chaque dispositif extracteur 11, 12, celui-ci peut comprendre au moins un actionneur 12, de préférence, du type vérin hydraulique ou pneumatique, capable d'effectuer la poussée et/ou la traction du porte-charge 3 associé et un mécanisme de support et de guidage 11 en déplacement capable de supporter le porte-charge 3 associé et d'assurer son guidage en déplacement lors de son extraction ou de sa rentrée.

De préférence, le mécanisme de support et de guidage 11 peut être adapté pour pouvoir être déployé, par exemple à la manière d'un pantographe, pour pouvoir passer d'un état rétracté correspondant à l'état rentrée du porte-charge 3 dans le convoyeur 2 correspondant à un état d'extraction correspondant à l'état de sortie du porte-charge 3 (figures 5, 6, 6a, 6b, 6c et 7).

Dans un mode de réalisation préférentiel du mécanisme de support et de guidage, celui-ci peut être adapté pour être déployé et peut comprendre des moyens de rappel élastiques, non représentés sur les figures annexées, permettant, lors de la rentrée de la tige du vérin 12 correspondant, de rentrer automatiquement le porte-charge 3 concerné dans le convoyeur 2 depuis son état de sortie.

Si on se réfère à nouveau aux figures 5, 6, 6a, 6b, 6c et 7, on peut voir que le mécanisme de support et de guidage 11 peut comprendre, dans une forme de réalisation préférentielle, un premier moyen de support 11a pouvant être fixé sur le porte-charge 3 associé, de préférence fixé sur sa face arrière opposée à sa face ouverte permettant le chargement ou le déchargement des produits, et un second moyen de support 11b pouvant être fixé dans le convoyeur 2. On peut voir également que le mécanisme de support et de guidage 11 peut comprendre en outre un mécanisme d'articulation 11c, 11d pouvant comprendre au moins un couple de bras articulés 11c, 11d disposés en croix, les extrémités libres de chaque bras étant reliés, l'une au premier moyen de support 11a et l'autre au second moyen de support 11b. Plus particulièrement, l'une des deux extrémités de chaque bras articulés 11c ou 11d peut être reliée par une articulation 11f fixée sur le premier ou second moyen de support 11a ou 11b et l'autre extrémité peut être reliée par une articulation 11g montée dans une glissière 11h fixée sur le premier ou second moyen de support 11a ou 11b.

De préférence, le premier moyen de support 11a et/ou le second moyen de support 11b peuvent présenter chacun, de préférence, une forme quadrangulaire (notamment figure 5).

D'autre part, comme on peut le voir plus particulièrement sur la figure 5, le mécanisme d'articulation peut comprendre, préférentiellement, deux couples de bras articulés 11c, 11d en croix et pouvant être reliés transversalement l'un à l'autre par au moins une traverse 11e, 11i permettant de rigidifier et de renforcer la liaison mécanique du porte-charge sur ledit mécanisme. Dans une forme préférentielle, le mécanisme d'articulation peut comprendre un élément en forme de cadre, dont deux côtés latéraux opposés peuvent former chacun l'un des bras articulés 11c ou 11d de chaque couple de bras 11c, 11d et les deux autres côtés opposés peuvent former les traverses 11e, 11i de renfort perpendiculaires auxdits bras.

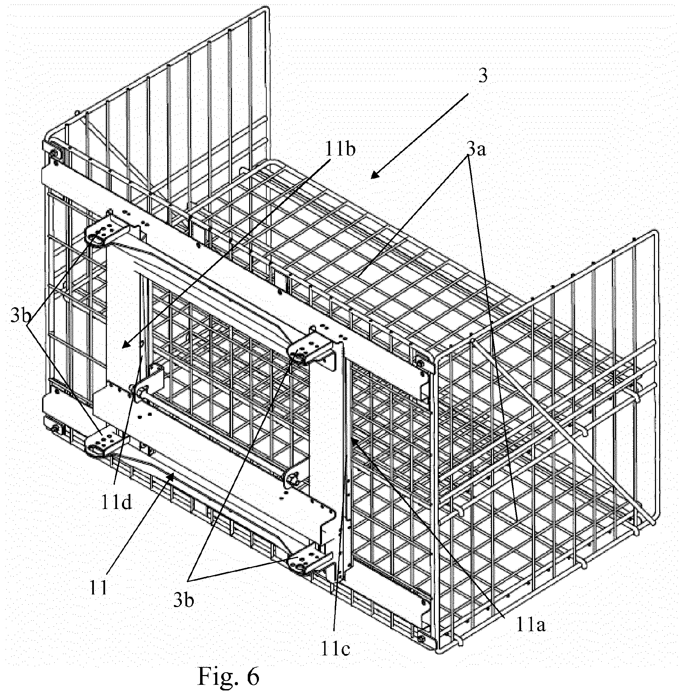

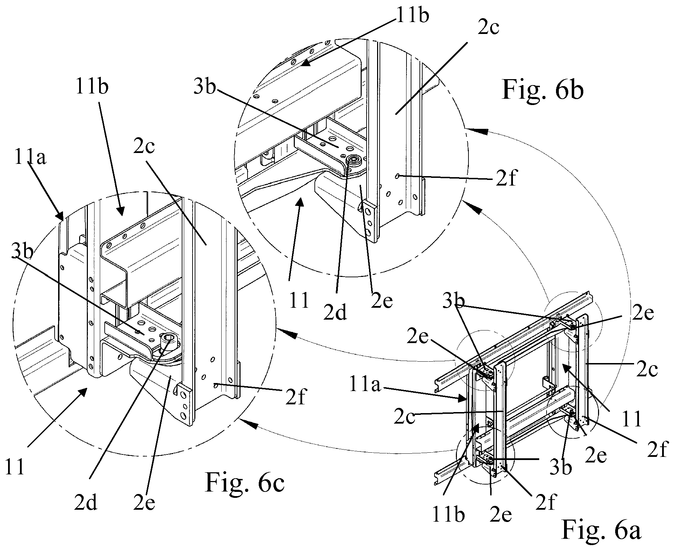

De préférence le second moyen de support 11b peut comprendre des pattes de fixation pouvant former au moins une partie des moyens de liaison 3b, 2c de chaque porte-charge 3 (figures 5, 6, 6a, 6b et 7). Le cas échéant, le second moyen de support 11b peut être fixé, par l'intermédiaire des pattes de fixation 3b, sur l'élément d'entraînement et de transport 8a ou 8b de chaque ligne 2a ou 2b correspondante. Le second moyen de support 11b peut comprendre au moins deux pattes de fixation 3b qui peuvent être prévues pour être fixées, le cas échéant, sur la ligne de transport supérieure 2a et au moins deux pattes de fixation 3b qui peuvent être prévues pour être fixées sur la ligne de transport inférieure 2b du convoyeur 2 (figures 6a et 6b).

De préférence, les moyens de liaison 3b, 2c de chaque porte-charge 3 à l'élément d'entraînement et de transport 8a ou 8b correspondant peuvent comprendre les pattes de fixation 3b et des pièces de liaison 2c. Chaque pièce de liaison 2c peut consister en un profilé allongé ou une barre rigides, pouvant être orienté verticalement dans le convoyeur et pouvant être fixée, par exemple par chacune de ses extrémités, à chaque élément d'entraînement et de transport 8a ou 8b (figures 6a, 6b et 6c).

Chaque patte de fixation 3b de chaque porte-charge 3 peut être fixée sur l'élément d'entraînement et de transport 8a ou 8b de la ligne de transport inférieure 2b ou supérieure 2a par l'intermédiaire de l'une des pièces de liaison 2c (figures 6a, 6b et 6c). Chaque patte de fixation 3b peut être fixée sur la pièce de liaison 2c par exemple au moyen de vis ou de boulons 2d. Chaque extrémité d'une pièce de liaison 2c peut être fixée à l'élément d'entraînement et de transport 8a ou 8b, par exemple au moyen de vis ou de boulon, non représentés, dans des trous 2f pratiqués à cet effet dans lesdites extrémités (figures 6a, 6b et 6c).

On peut voir également sur les figures 6a, 6b et 6c que chaque pièce de liaison 2c allongée comporte à chacune de ses extrémités une patte de liaison 2e s'étendant sensiblement perpendiculairement à la pièce de liaison 2c et servant à la fixation de la patte de fixation 3b correspondante.

Dans une forme de réalisation préférentielle, l'actionneur 12, du type vérin hydraulique ou pneumatique, peut s'étendre horizontalement ou sensiblement horizontalement, de préférence transversalement au sens de convoyage des porte-charges et le fut 12a dudit vérin peut être fixé sur une partie fixe du convoyeur et l'extrémité de la tige 12b peut venir, en sortie, en butée de poussée directement sur le porte-charge 3 ou sur le second moyen de support 11b du mécanisme de support et de guidage de sorte à pousser le porte-charge 3 en vue de son extraction (de sa sortie), le cas échéant grâce au déploiement du mécanisme d'articulation 11c, 11d (figure 7).

De préférence, dans le cas où chaque vérin 12 est adapté pour pousser chaque porte-charge 3 concerné en vue de son extraction, le mécanisme d'articulation peut comprendre les moyens de rappel élastiques permettant, lors de la rentrée de la tige du vérin 12, de rentrer automatiquement chaque porte-charge 3 sorti dans le convoyeur 2. Les moyens de rappels élastiques peuvent consister, par exemple, en des ressorts, non visibles sur les figures annexées, par exemple situés au niveau des extrémités des bras 11e ou 11d et des glissières 11h, capables de rétracter automatiquement, par la force de rappel des ressorts, lors de la rentrée de la tige 12b du vérin 12, le mécanisme d'articulation en rapprochant l'un vers et/ou contre l'autre les premiers et moyens de support 11a et 11b constituant le cas échéant le mécanisme d'articulation.

La présente invention peut également prévoir, comme on peut le voir sur la figure 8, qu'au moins l'un des postes d'approvisionnement et/ou de prélèvement 5 ou 6 puissent comprendre au moins un écran 13a, 13b ou 13c d'affichage de données et/ou d'images permettant d'établir une communication visuelle avec un opérateur concernant les opérations d'approvisionnement ou de prélèvement des produits.

Par exemple, la présente invention peut prévoir au moins un écran 13a par niveau ou étage de convoyeurs 2, de préférence permettant d'afficher ou d'indiquer à l'opérateur la quantité de produits commandée pour la même référence de produit. Elle peut prévoir également au moins un écran 13b de sécurité au cas où le système informatique tombe en panne. Elle peut prévoir encore au moins un écran 13c qui peut être fourni par le client, utilisateur d'un tel système selon l'invention, suivant les exigences du logiciel de suivi des commandes.

Le ou chaque écran 13a, 13b ou 13c peut être relié fonctionnellement aux moyens de contrôle et de gestion du système. Le ou chaque écran 13a, 13b ou 13c peut être fixé sur le cadre dormant 9c de l'une des portes 9a ou fenêtres concernée ou sur une surface support située à proximité cette dernière (figure 8).

Par ailleurs, comme on peut le voir encore sur la figure 8, la présente invention peut prévoir un marche pied 14, de préférence escamotable, situé au niveau du sol en contrebas des bacs ou paniers 3 et permettant à l'opérateur d'accéder au porte-charges 3 du ou des convoyeurs 2 les plus haut.

La présente invention a également pour objet un procédé de contrôle du chargement ou du déchargement du système tel que défini selon la présente invention, dont chaque convoyeur 2 de chaque module 4 est prévu pour stocker les mêmes produits que le ou les autres convoyeurs 2 de sorte à former, dans chaque module 4, un ou plusieurs convoyeurs 2 relais capables de prendre le relais du ou des autres convoyeurs 2.

Conformément à la présente invention un tel procédé consiste, selon qu'il contrôle le prélèvement des produits ou leur approvisionnement, à réaliser les étapes suivantes :
pour le contrôle du prélèvement du produit commandé au ou à l'un des postes de prélèvement du ou de l'un des modules 4 :
- une étape de validation du prélèvement du produit,
- puis une étape de commande de l'un des convoyeurs 2a ou 2b pour amener le produit jusqu'au poste de prélèvement 6 concerné, ou, lorsque l'un au moins des convoyeurs 2 stockant ledit produit est engagé dans une étape d'approvisionnement ou d'interruption, par exemple une étape de maintenance, à réaliser une étape de commande du ou de l'un des autres convoyeurs 2 relais du module ou du même module, qui n'est pas engagé dans ladite étape d'approvisionnement ou d'interruption, pour amener le produit stocké jusqu'audit poste de prélèvement 6 concerné,
   - pour le contrôle de l'approvisionnement en produit à l'un des postes d'approvisionnement et/ou de prélèvement 5 de l'un des modules 4 :
      - une étape de validation de l'approvisionnement en produit,
      - une étape de commande de l'un des convoyeurs 2a ou 2b pour amener un porte-charge 3 à approvisionner en produit jusqu'au poste d'approvisionnement et/ou de prélèvement 5 ou 6 concerné ou, lorsque l'un au moins des convoyeurs 2 comportant un porte-charge 3 vide ou partiellement vide destiné à recevoir le produit à approvisionner est engagé dans une étape de prélèvement ou d'interruption, par exemple de maintenance, à réaliser une étape de commande du ou de l'un des autres convoyeurs 2 relais qui n'est pas engagé dans ladite étape de prélèvement ou d'interruption, pour amener ledit porte-charge 3 vide ou partiellement vide jusqu'audit poste d'approvisionnement et/ou de prélèvement 5 ou 6 concerné.

Le procédé peut consister à réaliser en outre :
- pour le contrôle du prélèvement, une étape de commande du convoyeur 2, dont l'emplacement du porte-charge 3 contenant le produit à prélever est le plus proche du poste d'approvisionnement et/ou de prélèvement 5 ou 6 concerné, pour amener ledit porte-charge 3 jusqu'audit poste de prélèvement 6 concerné,
- pour le contrôle de l'approvisionnement, une étape de commande du convoyeur 2 qui comprend un porte-charge 3 à approvisionner le plus proche du poste d'approvisionnement et/ou de prélèvement 5 concerné, pour amener ledit porte-charge 3 à approvisionner jusqu'à ce dernier.

Ainsi la solution proposée par la présente invention offre au moins l'un des avantages suivants :
- permet de prélever les commandes dans le système et de réapprovisionner ce dernier simultanément, c'est-à-dire sans interruption du système ou du module concerné, le système garantissant ainsi la présence constante de produits nécessaires à la préparation des commandes. De ce fait la quantité de marchandises stockées peut être nettement inférieure à un système ne permettant pas un chargement (réapprovisionnement) et un déchargement (prélèvement), de façon simultanée ou continue, des produits,
- réduction de la quantité de marchandises déplacées et économie de l'énergie,
- réduction des contraintes sur les produits,
- réduction des efforts des opérateurs,
- maintien de l'opérativité et de la productivité du système même en cas d'un éventuel arrêt de l'un des convoyeurs pour cause de maintenance,
- dans un mode de réalisation préférentiel, utilisation de deux zones indépendantes situées aux deux extrémités de chaque module, l'une principalement pour le chargement et l'autre principalement pour le déchargement, les deux zones d'extrémités de l'enceinte pouvant être utilisées, chacune soit en zone de chargement, soit en zone de déchargement ou simultanément en zone de chargement ou de déchargement de manière à optimiser l'une ou l'autre des opérations de chargement ou de déchargement,
- possibilité de faire fonctionner le système avec des grandes vitesses de déplacement des porte-charges réduisant ainsi les temps de positionnement des porte-charges aux postes d'approvisionnement ou de prélèvement ou à une position de stockage dans les convoyeurs, tout en utilisant moins d'énergie,
- possibilité de permettre aux opérateurs de tailles différentes de prendre les bacs ou paniers 3 ou les produits se trouvant sur le convoyeur situé au niveau approprié.

Bien entendu, l'invention n'est pas limitée au mode de réalisation décrit et représenté aux dessins annexés. Des modifications restent possibles, notamment du point de vue de la constitution des divers éléments ou par substitution d'équivalents techniques, sans sortir pour autant du domaine de protection de l'invention comme défini par les revendications.

## Revendications

1. Système de transport et de stockage automatique de produits pour la préparation de leurs commandes, ledit système comprenant une station de stockage (1) desdits produits comprenant des porte-charges (3) individuels aptes à être approvisionnés en produits stockés dans ces derniers dans l'attente de leur prélèvement pour réaliser ladite préparation, **caractérisé en ce que** la station de stockage comprend en outre :
- une enceinte (9) renfermant une pluralité de modules (4) de transport et de stockage comprenant chacun au moins deux convoyeurs indépendants (2) capables de transporter automatiquement, indépendamment l'un de l'autre, lesdits portes-charges, lesdits convoyeurs, qui forment chacun un circuit de transport et de stockage en boucle fermée s'étendant dans un plan horizontal ou sensiblement horizontal, étant superposés l'un au-dessus de l'autre,
- une pluralité d'ouvertures d'accès (5) pratiquées dans ladite enceinte permettant à un opérateur d'accéder, depuis l'extérieur de l'enceinte (9), aux porte-charges (3) pour réaliser leur approvisionnement en produits et/ou le prélèvement des produits stockés dans ces derniers,
- une pluralité de portes (9a) et/ou une pluralité de fenêtres permettant d'assurer la fermeture de chaque ouverture d'accès, chaque porte (9a) ou fenêtre définissant un poste d'approvisionnement et/ou de prélèvement (5, 6),
- des moyens de contrôle et de gestion prévus essentiellement pour commander et contrôler chaque module (4) et, le cas échéant, l'ouverture ou la fermeture automatique de chaque porte,
**caractérisé en ce que** :
- les modules (4) s'étendent dans l'enceinte (9) parallèlement ou sensiblement parallèlement les uns à côtés des autres,
- chaque module (4) est allongé ou rectiligne en s'étendant entre deux extrémités opposées, dont l'une des extrémités est formée par l'un desdits postes prévu pour assurer essentiellement l'approvisionnement en produits des porte-charge (3), le cas échéant le prélèvement des produits de ces derniers, et l'autre extrémité est formée par l'autre ou l'un des autres postes prévu pour assurer essentiellement le prélèvement des produits stockés des porte-charges (3), le cas échéant l'approvisionnement en produits de ces derniers.

2. Système, selon la revendication 1, **caractérisé en ce que** chaque porte (9a) ou fenêtre comprend un dormant (9c) et est fermée par une pluralité de battants (9b) fermant chacun partiellement la porte (9a) ou la fenêtre et **en ce que** chaque porte (9a) ou fenêtre comprend au moins deux étages comportant chacun au moins l'un des battants (9b), chaque étage de battant(s) étant situé au niveau de l'un des convoyeurs (2) du module (4) correspondant.

3. Système, selon la revendication 2 **caractérisé en ce que** le ou les battants (9b) sont adaptés pour être commandé et actionnés en ouverture et/ou en fermeture automatiquement, au moyen d'un système ferme porte ou fenêtre, ou manuellement, indépendamment les uns des autres, par les moyens de contrôle et de gestion et/ou par un moyen de commande propre disposé dans le poste d'approvisionnement et/ou de prélèvement (5, 6) concerné.

4. Système, selon l'une quelconque des revendications 1 à 3, **caractérisé en ce qu'**il comprend en outre une pluralité de dispositifs extracteurs (11, 12) et **en ce que** les porte-charges (3) de l'un au moins des convoyeurs (2) du ou d'au moins l'un des modules sont rendus extractibles en étant associés chacun à l'un des dispositifs extracteurs, chaque dispositif extracteur (11, 12) étant capable de pousser et/ou de tirer le porte-charge (3) associé dans une direction horizontale et transversale au sens de convoyage, ce de sorte à pouvoir faire sortir chaque porte-charge (3) extractible de l'enceinte (9) à travers la porte (9a) ou fenêtre du poste d'approvisionnement et/ou de prélèvement (5, 6) correspondant où est transporté le porte-charge (3) concerné ou à déplacer chaque porte-charge (3) extractible au niveau de cette dernière.

5. Système, selon la revendication 4, **caractérisé en ce que** chaque dispositif extracteur (11, 12) peut comprendre au moins un actionneur (12), de préférence du type vérin hydraulique ou pneumatique, capable d'effectuer la poussée et/ou la traction du porte-charge (3) associé et un mécanisme de support et de guidage (11) en déplacement, de préférence adapté pour être déployé pour passer d'un état rétracté correspondant à l'état rentrée du porte-charge (3) dans le convoyeur (2) à un état d'extraction correspondant à l'état de sortie du porte-charge (3), capable de supporter le porte-charge (3) associé et d'assurer son guidage en déplacement lors de son extractation ou de sa rentrée.

6. Système, selon la revendication 5, **caractérisé en ce que** le mécanisme de support et de guidage est adapté pour être déployé et comprend des moyens de rappel élastiques permettant, lors de la rentrée de la tige du vérin (12) correspondant, de rentrer automatiquement chaque porte-charge (3) dans le convoyeur depuis son état de sortie.

7. Système, selon l'une quelconque des revendications 1 à 6, **caractérisé en ce que** chaque porte-charge (3) consiste en un bac ou panier de forme globalement parallélépipédique rectangle, ou autre réceptacle analogue, ouvert sur au moins l'un de ses côtés de sorte à permettre le chargement ou l'enlèvement des produits dans ledit porte-charge.

8. Système, selon la revendication 7, **caractérisé en ce que** chaque bac ou panier (3) comprend une série de tablettes (3a) horizontales permettant de supporter les produits et disposées dans ledit bac ou panier les unes au-dessus des autres, chaque tablette (3a) formant un étage de stockage dans ledit bac ou panier (3) accessible par la ou l'une des ouvertures du bac ou panier (3) correspondant et **en ce que**, éventuellement, chaque tablette (3a) est divisée en une pluralité de secteurs de stockage.

9. Système, selon l'une quelconque des revendications 7 à 8, **caractérisé en ce que** le ou au moins l'un des postes d'approvisionnement et/ou de prélèvement (5, 6) comprend des moyens lumineux (10), tels que des LEDS, indiquant le niveau de l'étage et, le cas échéant, le secteur ou le côté du bac ou panier (3) duquel prélever les produits.

10. Système, selon l'une quelconque des revendications 1 à 9, **caractérisé en ce que** chaque convoyeur (2) comprend au moins deux lignes, respectivement inférieure (2a) et supérieure (2b), de transport en boucle fermée s'étendant chacune dans un plan horizontal ou sensiblement horizontal et **en ce que** chaque porte-charge (3) est monté, directement ou indirectement, sur les deux lignes superposées (2a, 2b) du convoyeur (2) correspondant en au moins un point de fixation ou d'accrochage, de préférence deux points, sur la ligne supérieure (2b) et en au moins un point de fixation ou d'accrochage, de préférence deux points, sur la ligne inférieure (2a).

11. Système, selon la revendication 10, **caractérisé en ce que** chaque ligne (2a, 2b) inférieure ou supérieure comprend un élément d'entraînement et de transport (8a, 8b) continu, tel que par exemple un ruban, une courroie ou une chaîne, des moyens d'entraînement (8c, 8d et 8e) et un rail de guidage (7a, 7b) en boucle fermée adapté pour supporter et guider ledit élément d'entraînement et de transport apte à circuler le long dudit rail en étant entraîné en déplacement grâce auxdits moyens d'entraînement et **en ce que** chaque porte-charge (3) du convoyeur (2) correspondant est fixé ou accroché par l'intermédiaire de moyens de liaison (3b, 2c) sur l'élément d'entraînement et de transport (8a, 8b) de chaque ligne (2a, 2b) correspondante pour permettre son déplacement le long dudit rail.

12. Système, selon la revendication 11, **caractérisé en ce que** chaque élément d'entraînement et de transport (8a, 8b) consiste en un ruban ou une courroie en acier spécial flexible monté, au moins en partie, par l'intermédiaire de roulements (8f), de préférence de roulements à billes autolubrifiants, dans le rail de guidage (7).

13. Système selon l'une quelconque des revendications 1 à 12, **caractérisé en ce que** au moins l'un des postes d'approvisionnement et/ou de prélèvement (6) comprend au moins un écran (13a, 13b, 13c) d'affichage de données et/ou d'images permettant d'établir une communication visuelle avec un opérateur concernant les opérations d'approvisionnement ou de prélèvement des produits.

14. Procédé de contrôle du système tel que défini selon l'une quelconque des revendications 1 à 13, dont chaque convoyeur (2) de chaque module (4) est prévu pour stocker les mêmes produits que le ou les autres convoyeurs (2) de sorte à former, dans chaque module (4), un ou plusieurs convoyeurs (2) relais capables de prendre le relais du ou des autres convoyeurs (2),
procédé **caractérisé en ce qu'**il consiste à réaliser les étapes suivantes, selon qu'il contrôle le prélèvement des produits ou leur approvisionnement :
pour le contrôle du prélèvement du produit commandé au ou à l'un des postes de prélèvement du ou de l'un des modules (4) :
- une étape de validation du prélèvement du produit,
- puis une étape de commande de l'un des convoyeurs (2) pour amener le produit jusqu'au poste d'approvisionnement et/ou de prélèvement (5, 6) concerné, ou, lorsque l'un au moins des convoyeurs (2) stockant ledit produit est engagé dans une étape d'approvisionnement ou d'interruption, par exemple une étape de maintenance, à réaliser une étape de commande du ou de l'un des autres convoyeurs (2) relais du module ou du même module, qui n'est pas engagé dans ladite étape d'approvisionnement ou d'interruption, pour amener le produit stocké jusqu'audit poste (5, 6) concerné,
• pour le contrôle de l'approvisionnement en produit au ou à l'un des postes d'approvisionnement et/ou de prélèvement (5, 6) de l'un des modules (4) :
- une étape de validation de l'approvisionnement en produit,
- une étape de commande de l'un des convoyeurs (2) pour amener un porte-charge (3) à approvisionner en produit jusqu'au poste d'approvisionnement (5, 6) concerné ou, lorsque l'un au moins des convoyeurs (2) comportant un porte-charge (3) vide ou partiellement vide destiné à recevoir le produit à approvisionner est engagé dans une étape de prélèvement ou d'interruption, par exemple de maintenance, à réaliser une étape de commande du ou de l'un des autres convoyeurs (2) relais qui n'est pas engagé dans ladite étape de prélèvement ou d'interruption, pour amener ledit porte-charge (3) vide ou partiellement vide jusqu'audit poste d'approvisionnement et/ou de prélèvement (5, 6) concerné.

15. Procédé, selon la revendication 14, **caractérisé en ce qu'**il consiste à réaliser en outre les étapes suivantes :
- pour le contrôle du prélèvement, une étape de commande du convoyeur (2), dont l'emplacement du porte-charge (3) contenant le produit à prélever est le plus proche du poste d'approvisionnement et/ou de prélèvement (5, 6) concerné, pour amener ledit porte-charge (3) jusqu'audit poste concerné,
- pour le contrôle de l'approvisionnement, une étape de commande du convoyeur (2) qui comprend un porte-charge (3) à approvisionner le plus proche du poste d'approvisionnement et de prélèvement (5, 6), pour amener ledit porte-charge (3) à approvisionner jusqu'audit poste.

## Patentansprüche

1. Automatisches System zum Transportieren und Lagern von Produkten zur Vorbereitung ihrer Bestellungen, wobei das System eine Lagerstation (1) der Produkte aufweist, die einzelne Lastträger (3) aufweist, die geeignet sind, mit Produkten versorgt zu werden, die in diesen Letzteren bis zu ihrer Entnahme gelagert werden, um die Vorbereitung durchzuführen, **dadurch gekennzeichnet, dass** die Lagerstation ferner umfasst:
- eine Umschließung (9), die mehrere Transport- und Lagermodule (4) einschließt, die jeweils mindestens zwei unabhängige Förderer (2) aufweisen, die geeignet sind, automatisch, unabhängig voneinander die Lastträger zu transportieren, wobei die Förderer, die jeweils einen Transport- und Lagerkreis in einem geschlossenen Kreislauf bilden, der sich in einer horizontalen oder im Wesentlichen horizontalen Ebene erstreckt, übereinanderliegend angeordnet sind,
- mehrere Zugangsöffnungen (5), die in der Umschließung ausgebildet sind, die einer Bedienperson ermöglichen, von außerhalb der Umschließung (9) auf die Lastträger (3) zuzugreifen, um ihre Versorgung mit Produkten und/oder die Entnahme der Produkte, die in diesen Letzteren gelagert sind, durchzuführen,
- mehrere Türen (9a) und/oder mehrere Fenster, die das Schließen von jeder Zugangsöffnung ermöglichen, wobei jede Tür (9a) oder jedes Fenster eine Versorgungs- und/oder Entnahmestelle (5, 6) definiert,
- Kontroll- und Verwaltungsmittel, die im Wesentlichen vorgesehen sind, um jedes Modul (4) und gegebenenfalls das automatische Öffnen oder das automatische Schließen von jeder Tür zu steuern und zu kontrollieren,
**dadurch gekennzeichnet, dass**:
- sich die Module (4) in der Umschließung (9) parallel oder im Wesentlichen parallel zueinander erstrecken,
- jedes Modul (4) länglich oder geradlinig ist und sich dabei zwischen zwei gegenüberliegenden Enden erstreckt, wovon eines der Enden durch eine der Stellen gebildet ist, die vorgesehen ist, um im Wesentlichen die Versorgung der Lastträger (3) mit Produkten, gegebenenfalls die Entnahme der Produkte aus diesen Letzteren zu gewährleisten, und das andere Ende durch die andere oder eine der anderen Stellen gebildet ist, die vorgesehen ist, um im Wesentlichen die Entnahme der gelagerten Produkte aus den Lastträgern (3), gegebenenfalls die Versorgung dieser Letzteren mit Produkten zu gewährleisten.

2. System nach Anspruch 1, **dadurch gekennzeichnet, dass** jede Tür (9a) oder jedes Fenster eine Zarge (9c) aufweist und durch mehrere Flügel (9b) geschlossen ist, die die Tür (9a) oder das Fenster jeweils teilweise schließen, und dadurch, dass jede Tür (9a) oder jedes Fenster mindestens zwei Etagen aufweist, die jeweils mindestens einen der Flügel (9b) aufweisen, wobei jede Etage des Flügels (der Flügel) auf Ebene von einem der Förderer (2) des entsprechenden Moduls (4) angeordnet ist.

3. System nach Anspruch 2, **dadurch gekennzeichnet, dass** der oder die Flügel (9b) geeignet sind, um zum Öffnen und/oder Schließen mit Hilfe von einem Tür- oder Fensterschließsystem automatisch oder manuell unabhängig voneinander durch die Kontroll- und Verwaltungsmittel und/oder durch ein eigenes Steuermittel, das an der betreffenden Versorgungs- und/oder Entnahmestelle (5, 6) angeordnet ist, gesteuert oder betätigt werden zu können.

4. System nach einem der Ansprüche 1 bis 3, **dadurch gekennzeichnet, dass** es ferner mehrere Extrahiervorrichtungen (11, 12) aufweist und dass die Lastträger (3) von mindestens einem der Förderer (2) des oder von mindestens einem der Module extrahierbar gemacht werden, indem sie jeweils einer der Extrahiervorrichtungen zugeordnet werden, wobei jede Extrahiervorrichtung (11, 12) geeignet ist, den zugeordneten Lastträger (3) in eine horizontale Richtung und quer zur Förderrichtung derart zu schieben und/oder zu ziehen, um jeden extrahierbaren Lastträger (3) aus der Umschließung (9) durch die Türe (9a) oder das Fenster der entsprechenden Versorgungs- und/oder Entnahmestelle (5, 6), wohin der betreffende Lastträger (3) befördert wird, herauszubringen oder jeden extrahierbaren Lastträger (3) auf Ebene dieser oder dieses Letzteren zu verschieben.

5. System nach Anspruch 4, **dadurch gekennzeichnet, dass** jede Extrahiervorrichtung (11, 12) mindestens einen Aktuator (12), vorzugsweise des Typs des Hydraulik- oder Pneumatikzylinders, der geeignet ist, den Schub und/oder den Zug des zugeordneten Lastträgers (3) auszuführen, und einen Mechanismus zum Stützen und Führen (11) in Verschiebung aufweist, der vorzugsweise geeignet ist, um ausgezogen zu werden, um von einem eingefahrenen Zustand, der dem Eintrittszustand des Lastträgers (3) in den Förderer (2) entspricht, in einen ausgefahrenen Zustand des Lastträgers überzugehen, der dem Austrittszustand des Lastträgers (3) entspricht, der geeignet ist, den zugeordneten Lastträger (3) zu stützen und seine Führung in Verschiebung während seines Austretens oder seines Eintretens zu gewährleisten.

6. System nach Anspruch 5, **dadurch gekennzeichnet, dass** der Mechanismus zum Stützen und Führen geeignet ist, um ausgezogen zu werden, und elastische Rückstellmittel aufweist, die ermöglichen, beim Eintreten der Stange des entsprechenden Zylinders (12) jeden Lastträger (3) von seinem Austrittszustand automatisch in den Förderer einzufahren.

7. System nach einem der Ansprüche 1 bis 6, **dadurch gekennzeichnet, dass** jeder Lastträger (3) aus einem Behälter oder Korb von im Allgemeinen rechteckiger, parallelepipedischer Form oder einem anderen ähnlichen Gefäß besteht, der oder das auf mindestens einer seiner Seiten derart offen ist, um das Laden und das Entnehmen der Produkte aus dem Lastträger zu ermöglichen.

8. System nach Anspruch 7, **dadurch gekennzeichnet, dass** jeder Behälter oder Korb (3) eine Reihe von horizontalen Ablagen (3a) aufweist, die ermöglichen, die Produkte zu tragen und in dem Behälter oder Korb übereinander angeordnet sind, wobei jede Ablage (3a) eine Lageretage in dem Behälter oder Korb (3) bildet, die durch die oder eine der Öffnungen des entsprechenden Behälters oder Korbs (3) zugänglich ist, und dadurch, dass jede Ablage (3a) eventuell in mehrere Lagerbereiche unterteilt ist.

9. System nach einem der Ansprüche 7 bis 8, **dadurch gekennzeichnet, dass** die oder mindestens eine der Versorgungs- und/oder Entnahmestellen (5, 6) Lichtmittel (10) wie LEDs aufweist, die die Ebene der Etage und gegebenenfalls den Bereich oder die Seite des Behälters oder Korbs (3) angeben, aus dem die Produkte zu entnehmen sind.

10. System nach einem der Ansprüche 1 bis 9, **dadurch gekennzeichnet, dass** jeder Förderer (2) mindestens zwei Transportlinien, jeweils eine untere (2a) und eine obere (2b), in einem geschlossenen Kreislauf aufweist, die sich in einer horizontalen oder im Wesentlichen horizontalen Ebene erstrecken, und dadurch, dass jeder Lastträger (3) direkt oder indirekt auf den zwei übereinander angeordneten Linien (2a, 2b) des entsprechenden Förderers (2) an mindestens einem Befestigungs- oder Einhängepunkt, vorzugsweise zwei Punkten, auf der oberen Linie (2b) und an mindestens einem Befestigungs- oder Einhängepunkt, vorzugsweise zwei Punkten, auf der unteren Linie (2a) befestigt ist.

11. System nach Anspruch 10, **dadurch gekennzeichnet, dass** jede untere oder obere Linie (2a, 2b) ein Element zum Antrieb und zum kontinuierlichen Transport (8a, 8b), wie beispielsweise ein Band, ein Riemen oder eine Kette, Antriebsmittel (8c, 8d und 8e) und eine Führungsschiene (7a, 7b) in einem geschlossenen Kreislauf aufweist, die geeignet ist, das Element zum Antrieb und zum Transport zu tragen und zu führen, das geeignet ist, entlang der Schiene zu zirkulieren, indem es dank der Antriebsmittel in Verschiebung angetrieben wird, und dadurch, dass jeder Lastträger (3) des entsprechenden Förderers (2) mit Hilfe von Verbindungsmitteln (3b, 2c) an dem Element zum Antrieb und zum Transport (8a, 8b) von jeder entsprechenden Linie (2a, 2b) befestigt oder darin eingehängt ist, um sein Verschieben entlang der Schiene zu ermöglichen.

12. System nach Anspruch 11, **dadurch gekennzeichnet, dass** jedes Element zum Antrieb und zum Transport (8a, 8b) aus einem Band oder einem Riemen aus flexiblem Spezialstahl besteht, das mindestens teilweise durch Lager (8f), vorzugsweise selbstschmierende Kugellager, in der Führungsschiene (7) befestigt ist.

13. System nach einem der Ansprüche 1 bis 12, **dadurch gekennzeichnet, dass** die mindestens eine der Versorgungs- und/oder Entnahmestellen (6) mindestens einen Bildschirm (13a, 13b, 13c) zum Anzeigen von Daten und/oder Bildern aufweist, der ermöglicht, eine visuelle Kommunikation bezüglich der Versorgungs- oder Entnahmevorgänge der Produkte mit einer Bedienperson zu erstellen.

14. Verfahren zur Kontrolle des Systems, wie nach einem der Ansprüche 1 bis 13 definiert, wobei jeder Förderer (2) von jedem Modul (4) vorgesehen ist, um die gleichen Produkte wie der oder die anderen Förderer (2) derart zu speichern, um in jedem Modul (4) einen oder mehrere Ablöseförderer (2) zu bilden, die geeignet sind, den oder die anderen Förderer (2) abzulösen,
wobei das Verfahren **dadurch gekennzeichnet ist, dass** es darin besteht, die folgenden Schritte durchzuführen, je nachdem ob es die Entnahme der Produkte oder ihre Versorgung kontrolliert:
zum Kontrollieren der Entnahme des bestellten Produkts an einer oder einer der Entnahmestellen des oder eines der Module (4):
- einen Validierungsschritt der Entnahme des Produktes,
- dann einen Schritt des Steuerns von einem der Förderer (2), um das Produkt bis zu der betreffenden Versorgungs- und/oder Entnahmestelle (5, 6) zu bringen oder, wenn mindestens einer der Förderer (2), die das Produkt lagern, in einem Schritt der Versorgung oder der Unterbrechung, beispielsweise einem Schritt der Wartung, eingesetzt wird, Durchführen eines Schrittes des Steuerns des oder der anderen Ablöseförderer (2) des Moduls oder des gleichen Moduls, der in dem Schritt der Versorgung oder der Unterbrechung nicht eingesetzt wird, um das gespeicherte Produkt bis zu der betreffenden Stelle (5, 6) zu bringen, zum Kontrollieren der Produktversorgung an einer oder einer der Entnahmestellen und/oder der Entnahme (5, 6) eines der Module (4):
- einen Validierungsschritt der Produktversorgung,
- einen Schritt des Steuerns von einem der Förderer (2), um einen Lastträger (3) zum Produktversorgen bis zu der betreffenden Versorgungsstelle (5, 6) zu bringen oder, wenn mindestens einer der Förderer (2), der einen leeren oder teilweise leeren Lastträger (3) aufweist, der dazu bestimmt ist, das bereitzustellende Produkt aufzunehmen, in einem Schritt der Entnahme oder der Unterbrechung, beispielsweise der Wartung, eingesetzt wird, Durchführen eines Schrittes des Steuerns des oder der anderen Ablöseförderer (2), der in dem Schritt der Entnahme oder der Unterbrechung nicht eingesetzt wird, um den leeren oder teilweise leeren Lastträger (3) bis zu der betreffenden Versorgungs- und/oder Entnahmestelle (5, 6) zu bringen.

15. Verfahren nach Anspruch 14, **dadurch gekennzeichnet, dass** es darin besteht, ferner die folgenden Schritte durchzuführen:
- zum Kontrollieren der Entnahme einen Schritt des Steuerns des Förderers (2), wovon die Position des Lastträgers (3), der das zu entnehmende Produkt enthält, der betreffenden Versorgungs- und/oder Entnahmestelle (5, 6) am nächsten liegt, um den Lastträger (3) bis zu der betreffenden Stelle zu bringen,
- zum Kontrollieren der Versorgung einen Schritt des Steuerns des Förderers (2), der einen zu versorgenden Lastträger (3) aufweist, der der betreffenden Versorgungs- und/oder Entnahmestelle (5, 6) am nächsten liegt, um den Lastträger (3) bis zu der Stelle zu bringen.

## Claims

1. System for the automatic transport and stocking of products for making up orders therefor, the said system comprising a stocking station (1) for the said products comprising individual bearers (3) able to be supplied with products stocked therein awaiting picking to make up said order, **characterized in that** the stocking station further comprises:
- a space (9) enclosing a plurality of transport and stocking modules (4) each one comprising at least two independent conveyors (2) capable of transporting, automatically and independently of one another, the said bearers, the said conveyors, which each form a closed-loop transport and stocking circuit, extending in a horizontal or substantially horizontal plane, being superposed one above the other,
- a plurality of access openings (5) made in said space to allow an operator to access the bearers (3), from outside the space (9), so as to supply them with products and/or pick products stocked therein,
- a plurality of doors (9a) and/or a plurality of windows allowing each access opening to be closed, each door (9a) or window defining a stocking and/or picking station (5, 6),
- management and control means essentially intended to command and control each module (4) and, where appropriate, to automatically open or close each door,
**characterized in that**:
- the modules (4) extend in the space (9) parallel or substantially parallel next to one another,
- each module (4) is elongate or rectilinear, extending between two opposite ends, of which one end is formed by one of the said stations intended essentially for supplying the bearers (3) with products, and where appropriate for picking products therefrom, and the other end is formed by the other or one of the other stations intended essentially for picking stocked products from the bearers (3) and, where appropriate, supplying same with products.

2. System according to Claim 1, **characterized in that** each door (9a) or window comprises a fixed frame (9c) and is closed by a plurality of leaves (9b) each partially closing the door (9a) or the window, and **in that** each door (9a) or window comprises at least two levels each one comprising at least one of the leaves (9b), each level of leaf/leaves being situated at the level of one of the conveyors (2) of the corresponding module (4).

3. System according to Claim 2, **characterized in that** the leaf or leaves (9b) are designed to be operated and made to open and/or close automatically, by means of a door or window closing system, or manually, independently of one another, by the management and control means and/or by a specific operating means positioned in the stocking and/or picking station (5, 6) concerned.

4. System according to any one of Claims 1 to 3, **characterized in that** it further comprises a plurality of extractor devices (11, 12) and **in that** the bearers (3) of at least one of the conveyors (2) of the or of at least one of the modules are rendered extractable by each being associated with one of the extractor devices, each extractor device (11, 12) being capable of pushing and/or pulling the associated bearer (3) in a direction that is horizontal and transverse to the direction of conveying, so as to be able to remove each extractable bearer (3) from the space (9) through the door (9a) or window of the corresponding stocking and/or picking station (5, 6) to which the bearer (3) concerned is transported or so as to move each extractable bearer (3) to this door or window.

5. System according to Claim 4, **characterized in that** each extractor device (11, 12) may comprise at least one actuator (12), preferably of the hydraulic or pneumatic actuating cylinder type, capable of pushing and/or pulling the associated bearer (3) and a support and movement guidance mechanism (11), preferably designed to be deployed from a retracted state corresponding to the bearer (3) being pushed into the conveyor (2) into an extraction state corresponding to the bearer (3) being in the taken-out state, and capable of supporting the associated bearer (3) and of guiding its movement as it is being taken out or put in.

6. System according to Claim 5, **characterized in that** the support and guidance mechanism is designed to be deployed and comprises elastic return means which, as the rod of the corresponding actuating cylinder (12) retracts, allows each bearer (3) to be returned automatically into the conveyor from its taken-out state.

7. System according to any one of Claims 1 to 6, **characterized in that** each bearer (3) consists of a tray or basket of rectangular parallelepiped overall shape, or other similar receptacle, open on at least one of its sides so as to allow products to be loaded into or taken out of said bearer.

8. System according to Claim 7, **characterized in that** each tray or basket (3) comprises a series of horizontal shelves (3a) able to support the products and arranged in the said tray or basket one above the other, each shelf (3a) forming a stocking tier in the said tray or basket (3) accessible via the or one of the openings of the corresponding tray or basket (3) and **in that**, eventually, each shelf (3a) is divided into a plurality of stocking sectors.

9. System according to any one of Claims 7 and 8, **characterized in that** the or at least one of the stocking and/or picking stations (5, 6) comprises lighting means (10), such as LEDs, indicating the tier level and, where appropriate, the sector or side of the tray or basket (3) from which to pick the products.

10. System according to any one of Claims 1 to 9, **characterized in that** each conveyor (2) comprises at least two closed-loop conveying lines, respectively a lower line (2a) and an upper line (2b), each one extending in a horizontal or substantially horizontal plane, and **in that** each bearer (3) is mounted directly or indirectly on the two superposed lines (2a, 2b) of the corresponding conveyor (2) at at least one fixing or attachment point, preferably two points, on the upper line (2b) and at at least one fixing or attachment point, preferably two points, on the lower line (2a).

11. System according to Claim 10, **characterized in that** each lower or upper line (2a, 2b) comprises a continuous drive and conveying element (8a, 8b) such as, for example, a band, a belt or a chain, drive means (8c, 8d and 8e) and a guide rail (7a, 7b) in a closed loop designed to support and guide the said drive and transport element able to run along the said rail while being driven in its movement by the said drive means, and **in that** each bearer (3) of the corresponding conveyor (2) is fixed or attached by connecting means (3b, 2c) to the drive and transport element (8a, 8b) of each corresponding line (2a, 2b) so as to allow it to be moved along the said rail.

12. System according to Claim 11, **characterized in that** each drive and transport element (8a, 8b) consists of a flexible special steel belt or band mounted, at least in part, via rolling bearers (8f), preferably self-lubricating ball bearings, in the guide rail (7).

13. System according to any one of Claims 1 to 12, **characterized in that** at least one of the stocking and/or picking stations (6) comprises at least one screen (13a, 13b, 13c) for displaying data and/or pictures making it possible to establish visual communication with an operator regarding the product stocking or picking operations.

14. Method for controlling the system as defined in any one of Claims 1 to 13, in which each conveyor (2) of each module (4) is designed to stock the same products as the other conveyor or conveyors (2) so as to form, within each module (4), one or more relay conveyors (2) capable of taking over from the other conveyor or conveyors (2) in relay,
the method being **characterized in that** it consists in performing the following steps, whereby it controls the picking of the products or the stocking thereof;
for controlling the picking of the ordered product at the or one of the picking stations of the or one of the modules (4):
- a step of validating the picking of the product,
- then a step of operating one of the conveyors (2) in order to bring the product to the stocking and/or picking station (5, 6) concerned or, when at least one of the conveyors (2) that stocks the said product is engaged in a stocking step or is down, for example for maintenance, in carrying out a step of operating the or one of the other relay conveyors (2) of the module or of the same module, which is not engaged in the said stocking step or is not down, to bring the stocked product to the said station (5, 6) concerned,
for controlling the stocking with product at the or at one of the stocking and/or picking stations (5, 6) of one of the modules (4):
- a step of validating the stocking with product,
- a step of operating one of the conveyors (2) to bring a bearer (3) that is to be stocked with product to the stocking station (5, 6) concerned or, when at least one of the conveyors (2) comprising an empty or partially empty bearer (3) intended to receive the product that is to be stocked is engaged in a picking step or is down, for example for maintenance, in carrying out a step of operating the or one of the other relay conveyors (2) which is not engaged in the said picking step or is not down, so as to bring the said empty or partially empty bearer (3) to the said stocking and/or picking station (5, 6) concerned.

15. Method according to Claim 14, **characterized in that** it consists in also carrying out the following steps:
- for control of picking, a step of operating the conveyor (2) of which the location of the bearer (3) containing the product that is to be picked is closest to the stocking and/or picking station (5, 6) concerned, so as to bring said bearer (3) to the said station concerned,
- for controlling stocking, a step of operating the conveyor (2) which comprises the bearer (3) that is to be stocked that is closest to the stocking and picking station (5, 6) so as to bring the said bearer (3) that is to be stocked to the said station.
